# EUROPÄISCHE PATENTSCHRIFT

(11) **EP 3 801 973 B1**
(45) Veröffentlichungstag und Bekanntmachung des Hinweises auf die Patenterteilung: **23.09.2026**
(21) Anmeldenummer: 19728419.3
(22) Anmeldetag: 03.06.2019
(51) Int. Cl.: B23K 26/06, B23K 26/082, B23K 26/04, B23K 26/046, B23K 1/005, B23K 26/14, B23K 26/362, B23K 26/38, B23K 26/342, B23K 26/21, B23K 26/70, B23K 26/144, B23K 26/352, B23K 26/0622

(54) **VORRICHTUNG ZUR LASERBEARBEITUNG SCHWER ZUGÄNGLICHER WERKSTÜCKE**
DEVICE FOR LASER MACHINING WORKPIECES THAT ARE DIFFICULT TO ACCESS
DISPOSITIF DE TRAITEMENT AU LASER DE PIÈCES DIFFICILEMENT ACCESSIBLES

(30) Priorität: 04.06.2018 DE 102018208752
(43) Veröffentlichungstag der Anmeldung: 14.04.2021
(73) Patentinhaber: Fraunhofer-Gesellschaft zur Förderung der angewandten Forschung e.V., 80686 München (DE)
(72) Erfinder: TRAUB, Martin, 52146 Würselen (DE); OLOWINSKY, Alexander, 52064 Aachen (DE); GILLNER, Arnold, 52159 Roetgen (DE); HÄUSLER, André, 52064 Aachen (DE)
(74) Vertreter: FARAGO Patentanwälte GmbH
(86) Internationale Anmeldenummer: PCT/EP2019/064334
(87) Internationale Veröffentlichungsnummer: WO 2019/233944

(56) Entgegenhaltungen:
- WO-A1-2017/013091
- JP-A- S6 027 487
- JP-A- S6 027 487
- JP-A- S60 227 219
- US-A1- 2008 314 880
- US-A1- 2008 314 880
- US-A1- 2014 092 372
- US-A1- 2014 092 372
- US-B2- 7 618 415

## Beschreibung

### Gebiet der Erfindung

Die Erfindung betrifft eine Vorrichtung zur Bearbeitung von schwer zugänglichen Werkstücken mittels eines abbildenden Strahlengangs sowie ein entsprechendes Verfahren zur Laserbearbeitung mittels dieser Vorrichtung.

### Hintergrund der Erfindung

Die Laserbearbeitung (Schweißen, Auftragsschweißen, Löten, Abtragen und Oberflächenstrukturierung) mit scannender Laserstrahlung bei schwer zuganglichen Bearbeitungsstellen stellt in der heutigen Fertigungstechnik ein erhebliches Problem dar. Anwendungen, die zum einen eine hohe Eintauchtiefe erfordern, die über den eigentlichen Arbeitsabstand der Fokussieroptik hinausgeht oder einen Platzbedarf für großformatige Fokussieroptiken haben, können lediglich zuungunsten des erreichbaren Laserstrahlfokusdurchmessers erreicht werden. Thermisch und elektrisch hochleitende Werkstoffe wie Kupfer und Aluminium besitzen bei der Bearbeitung mit Festkörperstrahlquellen hohe Reflexionsgrade, wodurch das Erreichen von charakteristischen Prozessschwellen (wie z.B. beim Tiefschweißen) erschwert wird. Eine Verkürzung der Brennweite und die damit verbundene Reduzierung des Fokusdurchmessers führen zu einer höheren Intensität am Bauteil und somit zu einem reproduzierbaren und stabileren Laserprozess. Allerdings führt eine größere Brennweite, die aufgrund von geometrischen Zugänglichkeiten am Bauteil oder an der Schweißmaschine verwendet werden muss, bei konstantem Durchmesser der Eintrittspupille stets zu einer Vergrößerung des Fokusdurchmessers und damit verbundenen Prozessinstabilitäten, die eine Bearbeitung von Materialien, insbesondere hochreflektiven Materialien, erschwert. Ziel muss also sein, einen kleinen Fokusdurchmesser durch eine kurze Brennweite zu erzielen, auch wenn die Zugänglichkeit der Fokussieroptik zum Bearbeitungsort dies bauraumbedingt nicht zulässt.

Die thermische und mechanische Stabilität der Optik ist überwiegend gegeben durch die geometrischen Randbedingungen der verwendeten Schweißoptik. Laserstrahlbearbeitungsprozesse mit Laserleistungen > 1 kW stellen hohe Anforderungen an eine gleichmäßige Temperaturverteilung und einen geringen Temperaturgradienten der optischen Elemente. Bei Verwendung von platzsparenden Fokussierlinsen reduziert sich die Kühlfläche, welche maßgeblich für die Temperaturerhöhung in Folge der absorbierten Strahlung ist. Unterschiedliche Temperaturen und Temperaturgradienten, die örtlich innerhalb der Optik und zeitlich während des Prozesses entstehen, führen zu einer Verschlechterung der Strahlqualität und zur Verschiebung des Fokusebene und damit des Arbeitsabstandes. Die dadurch geänderten optischen Bedingungen an der Werkstückoberfläche können zu Prozessinstabilitäten und Prozessabbrüchen führen, die für eine qualitativ hochstehende und effektive Bearbeitung zu vermeiden sind. Bei Anordnungen gemäß dem Stand der Technik zeigen die optischen Elemente gerade bei Leistungen > 1 kW eine nachteilige reduzierte thermisch und mechanische Stabilität.

Im Rahmen einer automatisierten Verwendung der bereits genannten Laserfertigungsverfahren ist eine Prozessüberwachung unumgänglich. Zur Prozessüberwachung dient im Allgemeinen vom Prozess emittierte Strahlung, die parallel gemessen und ausgewertet wird. Diese Prozessbeobachtung kann über einen externen Sensor mit einem Offset neben der eigentlichen Bearbeitungsoptik angebracht werden und reduziert somit die Zugänglichkeit zu den optischen Elementen und erhöht den Platzbedarf in den Bearbeitungsmaschinen. Zusätzlich zu der nicht koaxialen Prozessüberwachung wird der Platzbedarf durch die Zuführung von Prozessgasen oder Prozessstoffen weiter eingeschränkt, da diese ebenfalls über ergänzende Leitungen in die Bearbeitungszone geleitet werden müssen.

Zur Reduzierung des Platzbedarfes für die Bearbeitungsoptik und des Arbeitsabstandes in Bearbeitungsmaschinen besteht die Möglichkeit, den Laserstrahl über Lichtleitfasern relativ nah an die eigentliche Bearbeitungszone zu führen. Dieser Aufbau ist bei Verwendung von Ultrakurzpulslasern nicht möglich, da aufgrund der hohen verwendeten Energie Lichtleitfasern nicht verwendet werden können.

Medien, die dem Fertigungsprozess zugeführt müssen, sind üblicherweise an der Bearbeitungsstelle örtlich fixiert. Die Scangeometrie bleibt bei einer rotatorischen Bewegung der Achsen unverändert und dreht sich im globalen Koordinatensystem nicht mit. Ist nun aber eine gleichbleibende Ausrichtung der Scangeometrie im sogenannten Werkzeug-Center-Point erforderlich, muss die Bewegung und Drehrichtung der Scangeometrie auf die Achsbewegung angepasst werden. Bei der Verwendung von Zusatzwerkstoffen kann somit die Bestrahlungsrichtung und Bestrahlungsgeometrie nicht variabel gestaltet werden.

Aus der US-amerikansichen Offenlegungsschrift US 2014 / 092372 A1 ist ein Belichtungssystem mit einer Lichtquelle, die einen Strahl entlang einer optischen Achse aussendet, der in der Lage ist, eine Mehrphotonenreaktion in einem Harz auszulösen, bekannt. Das Belichtungssystem umfasst außerdem ein Harz, das eine Multiphotonenreaktion durchläuft, sowie ein automatisiertes System mit einem Monitor, der mindestens eine Eigenschaft des Strahls misst, ausgewählt aus Leistung, Impulslänge, Form, Divergenz oder Position in einer Ebene senkrecht zur optischen Achse. Der Monitor erzeugt mindestens ein Signal, das die Eigenschaft des Strahls angibt, und ein Untersystem passt den Strahl als Reaktion auf das Signal vom Monitor an.

Weiter ist aus dem US-amerikanischen Patent US 7,618,415 B2 (welche die Basis für den Oberbegriff des Anspruchs 1 bildet) eine Vorrichtung und ein Verfahren zum Lenken eines Laserstrahls zu einem Brennpunkt im Zielgewebe bekannt. Die Ablenkungen des Laserstrahls von einem zentralen Strahlengang werden durch eine sequentielle Anordnung optischer Lenkkomponenten minimiert. Dazu wird der Strahl zunächst auf die Mitte einer Z-Scan-Vorrichtung gerichtet, die den Brennpunkt im Medium in Z-Richtung bewegt. Der Strahl wird dann zur Mitte eines ersten galvanometrischen Spiegels geleitet, der Brennpunktbewegungen in der x-Richtung einleitet. Ein zweiter galvanometrischer Spiegel kompensiert dann die Bewegung in x-Richtung, indem er den Strahl in die Mitte eines dritten galvanometrischen Spiegels umlenkt, wo Brennpunktbewegungen in y-Richtung eingeführt werden.

Gemäß dem Stand der Technik wurden bisher Laserbearbeitungen mit hohen Eintauchtiefen mit Hilfe vergrößerter Brennweiten realisiert, welche sich nachteilig auf die Größe des resultierenden Fokusdurchmessers auswirken. Polymerfreie Aufbauten werden durch das mechanische Verspannen der optischen Komponenten realisiert. Dabei führen fest verbaute Linsen in Füllfassungen bei thermischer Belastung zu erhöhten Spannungen, die zu einer Änderung von Strahlpropagation und Strahlverteilung führen. Eine Prozessüberwachung, die aufgrund der Strahlführung in den Strahlengang integriert ist, kann somit nur nicht-koaxial erfolgen. Bei Bearbeitungen mit Ultrakurzpuls (UKP)-Laserstrahlquellen ist aufgrund der hohen Pulsspitzenleistung lediglich eine Freistrahlführung möglich. Der Arbeitsablauf bei den Fertigungsprozessen verläuft im Stand der Technik üblicherweise sequentiell. So sind die Bewegung des Scanners und der linearen oder rotatorischen Achsbewegung voneinander getrennt.

Es wäre daher wünschenswert, eine Vorrichtung zur Bearbeitung schwer zugänglicher Werkstücke mittels eines Lasers zur Verfügung zu haben, die auch für Laserprozess mit hohen Leistungen > 1 kW eine effektive und stabile Prozessführung mit geringem lateralen Platzbedarf oberhalb der Bearbeitungszone auf dem Werkstück ermöglicht. Diese Vorrichtung sollte gegebenenfalls auch die Zuführung von Medien zum Bearbeitungsprozess ermöglichen.

### Zusammenfassung der Erfindung

Es ist daher eine Aufgabe der Erfindung, eine Vorrichtung zur Bearbeitung schwer zugänglicher Werkstücke mittels eines Lasers zur Verfügung zu stellen, die auch für Laserprozesse mit hohen Leistungen > 1 kW oder auch hohen Pulsspitzenleistungen > 10 kW eine effektive und stabile Prozessführung mit geringem lateralen Platzbedarf oberhalb der Bearbeitungszone auf dem Werkstück ermöglicht.

Diese Aufgabe wird gelöst durch eine Vorrichtung zur Bearbeitung schwer zugänglicher Werkstücke mittels eines abbildenden Strahlengangs (beispielsweise ein Laserstrahl) umfassend eine Relayoptik mit einer durch die Relayoptik hindurchlaufenden optischen Achse und mit mindestens einer ersten und einer zweiten Relay-Optikgruppe mit jeweils mehreren optischen Elementen zur Erzeugung einer jeweiligen ersten und zweiten Brennweite und eine in der optischen Achse in Ausbreitungsrichtung des abbildenden Strahlengangs gesehen dahinter angeordnete Fokussiereinheit mit mehreren optischen Elementen zur Erzeugung einer dritten Brennweite, sowie einen in Ausbreitungsrichtung des abbildenden Strahlengangs gesehen vor der ersten Relay-Optikgruppe angeordneten Strahlscanner, der sowohl als Eintrittspupille für den in die erste Relay-Optikgruppe eintretenden abbildenden Strahlengang als auch mindestens zur Ablenkung des abbildenden Strahlengangs relativ zur optischen Achse vorgesehen ist, wobei die erste Relay-Optikgruppe dazu ausgestaltet ist, den abbildenden Strahlengang in einen Zwischenfokus zu fokussieren, der sich separat von der ersten und zweiten Relay-Optikgruppen zwischen der ersten und zweiten Relay-Optikgruppe befindet, und die zweite Relay-Optikgruppe dazu ausgestaltet ist, den Zwischenfokus zum Austritt aus der Relayoptik abzubilden und die Fokussiereinheit dazu ausgestaltet ist, den abbildenden Strahlengang in einem Fokus der Vorrichtung auf eine Fokusebene zur Bearbeitung des Werkstücks zu fokussieren, wobei eine Entfernung zwischen Eintrittspupille und einem Ende der Vorrichtung in Richtung des abbildenden Strahlengangs größer als ein zweifacher, vorzugsweise ein vierfacher, noch bevorzugter ein achtfacher, Durchmesser des größten optischen Elements der Relayoptik ist. In Ausbreitungsrichtung des abbildenden Strahlengangs gesehen vor dem Strahlscanner ist ein optisches Verschiebelement im abbildenden Strahlengang angeordnet, das eine stufenlose Variation der Fokusebene parallel zur optischen Achse ermöglicht. Das Verschiebeelement (auch als Z-Shifter bezeichnet) kann dabei als ein zwei- oder mehrlinsiges Teleskop oder anderweitiges System zur Veränderung von Strahldurchmesser und Strahldivergenz ausgeführt sein. Bei mindestens einer der Linsen kann die Position der Linsen entlang der Ausbreitungsrichtung des abbildenden Strahlengangs und somit die Lage der Fokusebene geändert werden. Der Strahlscanner umfasst ein System an Spiegeln zumindest zur Ablenkung des abbildenden Strahlengangs relativ zur optischen Achse. Ein zweidimensionaler Strahlscanner umfasst dabei zwei Spiegel, über die der Winkel zwischen aus dem Strahlscanner austretendem abbildenden Strahlengang und optischer Achse in der Ebene senkrecht zu optischen Achse verändert werden kann. Die Spiegel bilden hierbei die Eintrittspupille für die nachfolgende Relayoptik. Die Vorrichtung ist so ausgestaltet, dass ein Prozessüberwachungsstrahl koaxial zur optischen Achse durch die Vorrichtung zur Detektion durch mindestens einen optischen Sensor verläuft. Der Begriff "Prozessüberwachungsstrahl" bezeichnet die vom Prozess emittierte Strahlung und kann zur Prozessüberwachung verwendet werden. Der optische Sensor kann dabei an einem geeigneten Ort im Prozessüberwachungsstrahl angeordnet sein oder der Prozessüberwachungsstrahl wird an einer geeigneten Stelle aus der Vorrichtung heraus- und dem Sensor zugeführt. Im letzteren Fall kann der Sensor weit entfernt von der optischen Achse der Vorrichtung angeordnet sein.

Bei einer direkten Fokussierung tritt das Problem auf, dass eine räumliche Trennung von Eingangspupille und Bearbeitungsstelle mit einer Skalierung des Gesamtsystems einhergeht. Insbesondere müssen bei einer Vergrößerung des Bearbeitungsabstands die Aperturen der Linsen entsprechend vergrößert werden, da zum Erreichen einer gewünschten Spotgröße eine entsprechende numerische Apertur notwendig ist. Um bei großem Bearbeitungsabstand und großer Gesamtlänge einen ausreichend kleinen Gesamtdurchmesser der Optik zu erreichen, wird eine Relayoptik eingesetzt. Der Begriff Relayoptik bezeichnet dabei eine Gruppe von optischen Elementen, die das Bild invertieren und das optische System verlängern. Die verwendeten optischen Elemente umfassen beispielsweise konventionelle Linsen und Achromate. Relayoptiken erzeugen eine oder mehrere Zwischenfokusebenen im Strahlverlauf innerhalb der Relayoptik. Die endgültige Abbildung der Eintrittspupille wird erst im Fokus der Vorrichtung erreicht. Um die Relayoptik hohen Laserleistungen größer 1 kW, beispielsweise bis 10 kW, bei gepulsten Lasern auch über 10 kW, zugänglich zu machen, wurde die Relayoptik gemäß vorliegender Erfindung in zwei separate Teile, der ersten Relay-Optikgruppe mit entsprechenden ersten optischen Elementen und der zweiten Relay-Optikgruppe mit entsprechenden zweiten optischen Elementen unterteilt, die eine ausreichende Entfernung zueinander besitzen, um den Zwischenfokus außerhalb jeder einzelnen der Relay-Optikgruppen zu legen, hier zwischen die erste und die zweite Relay-Optikgruppe. Die erste Relay-Optikgruppe erzeugt den Zwischenfokus, der wiederum durch die zweite Relay-Optikgruppe nach unendlich abgebildet wird. Hierdurch entsteht zum einen der Zwischenfokus zwischen den beiden Gruppen und zum anderen wird die Eintrittspupille hinter der Relayoptik abgebildet. Mit Hilfe der Fokussiereinheit als abschließende fokussierende Optik umfassend dafür geeignete optische Elemente (beispielweise konventionelle Linsen und Achromate) wird der abbildenden Strahlengang (beispielsweise ein Laserstrahl) im Fokus der Vorrichtung auf das Werkstück fokussiert. Die Brennweiten der beiden Komponenten (Relayoptik und Fokussiereinheit) sind so zu wählen, dass das gewünschte Aspektverhältnis der gesamten Optik als Verhältnis von Gesamtlänge zu Durchmesser größer zwei ist. Dadurch können hohe Leistungsdichten, die sonst zu einer Zerstörung der Bauteil führen würden, auf den Oberflächen der optischen Elemente beziehungsweise in den optischen Elementen vermieden werden. In einer bevorzugten Ausführungsform ist das Verhältnis von Gesamtlänge zu Durchmesser größer vier, vorzugsweise sogar größer acht. Die Entfernung kann beispielsweise 300mm bis 500mm bei einem Durchmesser des größten optischen Elements von 35mm betragen. Bei einer solchen Entfernung von größer als der 10fache des Durchmessers des größten optischen Elements der Relayoptik können besonders hohe cw-Leistungsdichten bis zu 10 kW und Pulsleistungen > 10 kW ohne Schäden in der Vorrichtung durch die Vorrichtung auf ein Werkstück fokussiert werden. Hierbei kann der Durchmesser des größten optischen Elements zwischen 30mm und 50mm betragen.

Das Verschiebeelement minimiert zum Beispiel die Aberration des optischen Systems aus Relayoptik und Fokussiereinheit. Bei der Auslegung des Verschiebeelements kann berücksichtigt werden, dass eine Brennweitenänderung des Gesamtsystems zu einer Variation der Spotgröße führt, welche je nach Bearbeitungsmodus des Werkstücks minimiert werden sollte.

Der Sensor erlaubt eine Prozesssteuerung des Bearbeitungsprozesses, wobei durch das rückreflektierte Licht eine direkte Rückkopplung vom Werkstück zur Steuerung eingesetzt wird. Der Sensor kann jeglicher zur Detektion von Licht einer bestimmten Wellenlänge geeignete Sensor sein.

Die erfindungsgemäße Vorrichtung ist somit für die Bearbeitung bei manchen Werkstücken benötigte hohe Pulsleistung und hohe Pulsenergien der Laserpulse zugänglich und kann bei diesen Parametern langzeitig stabil arbeiten.

Die Eintrittspupille liegt hier in der Spiegelebene des Strahlscanners. Sie wäre mit einer Aperturblende identisch, falls sich diese in Strahlrichtung vor den abbildenden Elementen befinden würde. Die Austrittspupille ist das Bild der Eintrittspupille beim Verlassen des Lichtstrahls aus der Vorrichtung heraus an dem Ende der Vorrichtung, das der Fokusebene der Vorrichtung zugewandt ist. Der Fokus der Vorrichtung ist der Fokus des Lichtstrahls in der Fokusebene, nachdem der Lichtstrahl die Vorrichtung verlassen hat.

Der Strahlscanner dient dazu, den abbildenden Strahlengang zumindest relativ zur optischen Achse abzulenken. Dadurch kann der Fokus der Vorrichtung in einer Fokusebene um den Fokuspunkt herum wandern, der der Fokus der Vorrichtung wäre, sofern die Lage des abbildenden Strahlengangs mit der optischen Achse zusammenfallen würde. Durch diese örtliche Variation des Fokus der Vorrichtung hervorgerufen durch die Ablenkung des abbildenden Strahlengangs durch den Strahlscanner kann das Werkstück flächenmäßig in dem durch die optischen Elemente der Vorrichtung definierten Rahmen flexibel bearbeitet werden. Der Strahlscanner ist dazu in Ausbreitungsrichtung des abbildenden Strahlengangs gesehen vor der Relayoptik angeordnet. Die Ausbreitungsrichtung des abbildenden Strahlengangs bezeichnet die Richtung des Lichtwegs des abbildenden Strahlengangs (Laserlichts) vom Laser durch die optischen Komponenten hindurch bis zum Werkstück. Der Strahlscanner kann dabei ein zweidimensionaler Scanner oder ein dreidimensionaler Scanner sein. Zweidimensionale Scanner können die Lage des abbildenden Strahlengangs in einer Ebene variieren, hier beispielsweise in der Ebene senkrecht zur optischen Achse, dreidimensionale Scanner können die Lage des abbildenden Strahlengangs zusätzlich in einer weiteren Raumrichtung variieren. Durch die gewählte Anordnung der Komponenten der erfindungsgemäßen Vorrichtung wird erreicht, dass Bearbeitungsebene (auf dem Werkstück) und Position des Strahlscanners bei begrenzter lateraler Ausdehnung der verwendeten Optik voneinander entfernt angeordnet werden können. Damit kann die erfindungsgemäße Vorrichtung bei räumlich begrenzten Zugangsmöglichkeiten zum Werkstück bei großem Abstand zwischen Strahlscanner und Werkstück mit großer Eintauchtiefe des auf das Werkstück fokussierten abbildenden Strahlengangs mit kleinem Fokusdurchmesser und großem Scanfeld betrieben werden. Damit wird unter anderem eine Innenbearbeitung in Rohren und in Gehäusen mit großer Eintauchtiefe ermöglicht.

In einer weiteren Ausführungsform ist zwischen der ersten Relay-Optikgruppe und der zweiten Relay-Optikgruppe ein weiterer Strahlscanner im Strahlengang angeordnet, um damit entweder den abzubildenden Strahlengang nochmals zu modifizieren oder aber einen weiteren Strahl zusätzlich zum bereits die erste Relay-Optikgruppe durchlaufenden Strahlengang einzukoppeln oder aber um eine Bildüberwachung und Prozessbeobachtung in die Vorrichtung zu integrieren.

Hierbei können beispielsweise die ersten und zweiten Brennweiten der Relayoptik so gewählt werden, dass eine Entfernung zwischen Eintrittspupille und dem Ende der Vorrichtung in Richtung des abbildenden Strahlengangs größer als der zweifache Durchmesser des größten optischen Elements der Relayoptik ist. Dadurch können Schäden durch sehr hohe Leistungsdichten, die sonst zu einer Zerstörung der Bauteile führen würden, auf den Oberflächen der optischen Elemente beziehungsweise in den optischen Elementen vermieden werden.

Das zu bearbeitende Werkstück kann jegliches Werkstück sein, das mittels Strahlung bearbeitet werden kann. Dabei hängt die für die Bearbeitung benötigte Laserleistung vom Material des Werkstücks und von der gewünschten Bearbeitungsart ab. Die erfindungsgemäße Vorrichtung kann beispielsweise zum Laserschweißen, Laserauftragsschweißen, Laserlöten, Laserschneiden, Laserabtragen, Laserbohren, Lasermodifikation oder zur Laseroberflächenstrukturierung verwendet werden.

Geeignete Lichtquellen zur Erzeugung des abbildenden Strahlengangs sind beispielsweise Nd:YAG-Laser oder andere industrieübliche Festkörperlaser, Diodenlaser, CO₂-Laser oder Faserlaser. Leistungen bis zu 5 kW oder mehr lassen sich durch obige optische Elemente beispielsweise aus Diamantwerkstoff transportieren.

Diese Vorrichtung ermöglicht die Bearbeitung schwer zugänglicher Werkstücke mittels eines Lasers und ermöglicht für Laserprozesse mit hohen mittleren Leistungen > 1 kW und Pulsleistungen > 1 kW bzw. > 10 kW eine effektive stabile Prozessführung mit gleichermaßen geringem lateralen Platzbedarf oberhalb der Bearbeitungszone auf dem Werkstück.

In einer weiteren Ausführungsform ist das Verschiebeelement außerhalb der durch die Relayoptik definierten optischen Achse angeordnet, sodass der durch das Verschiebeelement hindurchgetretene abbildenden Strahlengang in einem Winkel zur optischen Achse auf den Strahlscanner fällt und der Strahlscanner dazu ausgebildet ist, den abbildenden Strahlengang entlang der optischen Achse umzulenken, vorzugsweise ist der Winkel 90 Grad. Dadurch kann die erfindungsgemäße Vorrichtung bei gleicher Gesamtlänge kompakter, das heißt mit geringerer Höhe oberhalb der Fokusebene des Fokus der Vorrichtung gebaut werden.

In einer weiteren Ausführungsform ist der Strahlscanner in Verbindung mit dem Verschiebeelement ein dreidimensionaler Strahlscanner, dessen System an Spiegeln auch eine Variation des abbildenden Strahlengangs entlang der optischen Achse ermöglicht. Hiermit lassen sich die Abbildungseigenschaften der Relayoptik und der Fokussiereinheit sowie die Fokusebene zusätzlich variieren.

In einer weiteren Ausführungsform ist der Sensor mit einer Steuerungseinheit verbunden, die dazu ausgebildet ist, die Bearbeitung des Werkstücks auf Basis einer vom Sensor detektierten Strahlung des Prozessüberwachungsstrahls zu steuern. Die vom Prozess emittierte Strahlung kann zur Prozessüberwachung parallel gemessen und ausgewertet werden, was die Prozesssteuerung verbessert. Die Steuereinheit kann ein Prozessor oder ein angeschlossener Rechner sein, auf dem ein entsprechendes Steuerprogramm installiert ist und von diesem ausgeführt wird.

In einer weiteren Ausführungsform sind zumindest der Strahlscanner, die Relayoptik und die Fokussiereinheit in einem Tubus angeordnet, wobei der Tubus als linearer, ein- oder mehrfach genickter oder beweglicher Tubus ausgebildet sein kann, wobei die optischen Elemente von Strahlscanner, Relayoptik und Fokussiereinheit geeignet angeordnet sind, den abbildenden Strahlengang durch den jeweiligen Tubus zu leiten. Der Tubus bezeichnet das äußere Gehäuse zur Halterung der voranstehend aufgeführten Komponenten und kann aus jedem dafür geeigneten Material gefertigt sein, vorzugsweise aus Metall. Ein linearer Tubus stellt eine einfache Anordnung dar, allerdings mit einer maximalen Höhe (Länge) über der Fokusebene des Fokus der Vorrichtung. Ein geknickter oder gar beweglicher Tubus verringert bei gleicher Länge diese Höhe, allerdings ist die Anordnung der entsprechenden optischen Elemente der Komponenten der erfindungsgemäßen Vorrichtung komplizierter. Je nach Anwendung und verfügbarem Raum oberhalb des Werkstücks kann ein linearer, geknickter oder beweglicher Tubus vorteilhaft sein.

In einer weiteren Ausführungsform umfasst die Vorrichtung eine Lichtquelle zur Erzeugung des abbildenden Strahlengangs. Alternativ dazu kann auch eine externe Lichtquelle an die erfindungsgemäße Vorrichtung zur Erzeugung des abbildenden Strahlengangs angeschlossen werden. Die Lichtquelle kann dabei ein Laser aus der Gruppe Nd:YAG-Laser, Festkörperlaser, Diodenlaser, Faserlaser oder CO₂-Laser sein oder der abbildende Strahlengang ist ein Einzelstrahl, ein Strahlenbündel oder eine beliebige Strahlform aus einer Bildquelle wie beispielsweise Axicon, diffraktiv optisches Element, Mikrospiegelarray oder Spatial Light Modulator oder einer Kombination daraus etc. Die Laser sind für die Laserbearbeitung von Werkstücken geeignet. Das Licht im abbildenden Strahlengang kann dabei eine Wellenlänge zwischen 157nm und 10600nm besitzen. Je nach Bearbeitungsart und Material des Werkstücks können Wellenlängen im sichtbaren Bereich, im infraroten oder tief infraroten Bereich verwendet werden.

In einer weiteren Ausführungsform bilden die zweite Relay-Optikgruppe und die Fokussiereinheit eine ineinander integrierte gemeinsame Optikgruppe, sodass keine Schnittstelle mehr zum kollimierten Strahl zwischen zweiter Relay-Optikgruppe und Fokussiereinheit existiert. Dadurch können die Eigenschaften der Vorrichtung weiter verbessert werden.

In einer weiteren Ausführungsform umfasst die Vorrichtung zumindest eine integrierte Zuführungsvorrichtung für eine Zufuhr von Zusatzwerkstoffen in Draht-, Pulver-, Band- oder Gasform und/oder zumindest eine integrierte Absaugvorrichtung zum Absaugen von Prozessemissionen. Manche Bearbeitungsprozesse erfordern die Zufuhr von Zusatzwerkstoffen in den heißen Bereich um den Fokus der Vorrichtung herum. Durch die kompakte Gestaltung der optischen Komponenten der erfindungsgemäßen Vorrichtung können entsprechende Zuleitungen für die Zusatzwerkstoffe ohne größeren Aufwand und Störung der optischen Eigenschaften an den Arbeitspunkt herangeführt werden. Das gleiche gilt für eventuelle Absaugungen von Prozessemissionen, die ohne solche Absaugungen den Bearbeitungsprozess negativ beeinflussen oder zu einer Gefährdung der Umgebung führen könnten. Die erfindungsgemäße Vorrichtung ermöglicht somit zusätzlich die Zuführung von Medien zum Bearbeitungsprozess.

In einer weiteren Ausführungsform ist zumindest die Ablenkung des abbildenden Strahlengangs mittels Strahlscanners mit der Zufuhr von Zusatzwerkstoffen durch die Zuführungsvorrichtung synchronisiert. Somit kann die Zufuhr der Zusatzwerkstoffe den in der Fokusebene wandernden Fokus der Vorrichtung folgen und für alle Positionen des Fokus der Vorrichtung die benötigte Menge an Zusatzwerkstoffen präzise und zuverlässig bereitstellen. Die Ablenkung des abbildenden Strahlengangs mittels Strahlscanner kann auch mit weiteren Achsen des Bewegungssystems beziehungsweise des Bearbeitungssystems synchronisiert werden.

In einer weiteren Ausführungsform ist die Vorrichtung polymerfrei aufgebaut. Dadurch ist die Vorrichtung deutlich temperaturstabiler als mit Polymermaterialien und erreicht für Bearbeitungen mit hohen Pulsspitzenleistungen und hohe mittleren Leistungen eine längere Lebensdauer und eine bessere Zuverlässigkeit bei geringerem Wartungsaufwand.

In einer weiteren Ausführungsform sind zumindest einige der optischen Elemente in Federelementen aufgehängt. Das ermöglicht einen thermischen Ausgleich des Optiksystems bei hoher thermischer Belastung durch hohe Laserleistungen und sichert zusätzlich eine längere Lebensdauer und eine bessere Zuverlässigkeit bei geringerem Wartungsaufwand.

Die Erfindung betrifft des Weiteren ein Verfahren zur Bearbeitung schwer zugänglicher Werkstücke mittels der erfindungsgemäßen Vorrichtung umfassend eine Relayoptik mit einer durch die Relayoptik hindurchlaufenden optischen Achse und mit mindestens einer ersten und einer zweiten Relay-Optikgruppe mit jeweils mehreren optischen Elementen zur Erzeugung einer jeweiligen ersten und zweiten Brennweite und eine in der optischen Achse in Ausbreitungsrichtung des abbildenden Strahlengangs gesehen dahinter angeordnete Fokussiereinheit mit mehreren optischen Elementen zur Erzeugung einer dritten Brennweite, sowie einen in Ausbreitungsrichtung des abbildenden Strahlengangs gesehen vor der ersten Relay-Optikgruppe angeordneten Strahlscanner, umfassend
- Einleiten des abbildenden Strahlengangs durch den Strahlscanner als Eintrittspupille in die erste Relay-Optikgruppe,
- Fokussieren des abbildenden Strahlengangs durch die erste Relay-Optikgruppe in einen Zwischenfokus, der sich separat von der ersten und zweiten Relay-Optikgruppe zwischen der ersten und zweiten Relay-Optikgruppe befindet,
- Abbilden des Zwischenfokus durch die zweite Relay-Optikgruppe zum Austritt aus der Relayoptik,
- Fokussieren des abbildenden Strahlengangs durch die Fokussiereinheit in einen Fokus der Vorrichtung auf einer Fokusebene zur Bearbeitung des Werkstücks, und
- Bearbeitung des Werkstücks mittels zumindest einer Ablenkung des abbildenden Strahlengangs relativ zur optischen Achse zur Bewegung des Fokus oder eines Fokusarrays der Vorrichtung in der Fokusebene mittels des Strahlscanners, wobei eine Entfernung zwischen Eintrittspupille und einem Ende der Vorrichtung in Richtung des abbildenden Strahlengangs größer als ein zweifacher, vorzugsweise ein vierfacher, noch bevorzugter ein achtfacher, Durchmesser des größten optischen Elements der Relayoptik ist.

Dieses Verfahren ermöglicht die Bearbeitung schwer zugänglicher Werkstücke mittels eines Lasers und ermöglicht für Laserprozesse mit hohen Leistungen > 1 kW eine effektive und stabile Prozessführung mit gleichermaßen geringem lateralen Platzbedarf oberhalb der Bearbeitungszone auf dem Werkstück.

Die voranstehend aufgelisteten Ausführungsformen können einzeln oder in beliebiger Kombination zueinander zur Ausgestaltung der erfindungsgemäßen Vorrichtung und des Verfahrens verwendet werden.

### Kurze Beschreibung der Abbildungen

Diese und andere Aspekte der Erfindung werden im Detail in den Abbildungen wie folgt gezeigt.
- Fig.1:: Schematische Darstellung zweier Ausführungsformen (a) und (b) der erfindungsgemäßen Vorrichtung;
- Fig.2:: Schematische Ausschnittdarstellung einer weiteren Ausführungsform der erfindungsgemäßen Vorrichtung mit Verschiebeelement;
- Fig.3:: Schematische Ausschnittdarstellung einer weiteren Ausführungsform der erfindungsgemäßen Vorrichtung mit Sensor und Steuereinheit;
- Fig.4:: Schematische Darstellung einer weiteren Ausführungsform der erfindungsgemäßen Vorrichtung angeordnet in einem (a) linearen Tubus und (b) einem geknickten Tubus;
- Fig.5:: Schematische Darstellung einer weiteren Ausführungsform der erfindungsgemäßen Vorrichtung mit Laserlichtquelle sowie Zuführeinrichtung und Absaugvorrichtung;
- Fig.6:: Schematische Darstellung einer Aufhängung der optischen Elemente in Federelementen;
- Fig.7:: Schematische Darstellung einer Ausführungsform des erfindungsgemäßen Verfahrens.

### Detaillierte Beschreibung der Ausführungsbeispiele

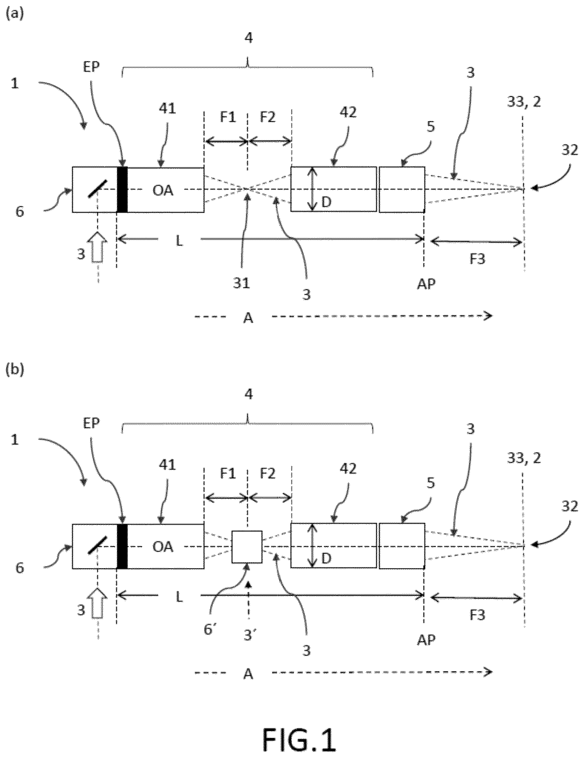

Fig.1a zeigt eine schematische Darstellung einer Ausführungsform der erfindungsgemäßen Vorrichtung 1 zur Bearbeitung schwer zugänglicher Werkstücke 2 mittels eines abbildenden Strahlengangs 3, hier und in den nachfolgenden Figuren als Beispiel ein Laserstrahl. Die Vorrichtung umfasst eine Relayoptik 4 mit einer durch die Relayoptik 4 hindurchlaufenden optischen Achse OA. Die Relayoptik 4 umfasst dabei mindestens eine erste und eine zweite Relay-Optikgruppe 41, 42 mit jeweils mehreren optischen Elementen 411, 421 zur Erzeugung einer jeweiligen ersten und zweiten Brennweite F1, F2. Anders als in Fig.1a,b eingezeichnet können die Hauptebenen für die Brennweiten F1, F2 auch innerhalb der jeweiligen Relay-Optikgruppen 41, 42 liegen. In der optischen Achse OA in Ausbreitungsrichtung A des Laserstrahls 3 gesehen dahinter ist eine Fokussiereinheit 5 mit mehreren optischen Elementen 51 zur Erzeugung einer dritten Brennweite F3 angeordnet. Anders als in Fig.1a, b eingezeichnet kann die Hauptebenen für die Brennweite F3 auch innerhalb der Fokussiereinheit 5 liegen. In Ausbreitungsrichtung A des Laserstrahls 3 gesehen vor der ersten Relay-Optikgruppe 41 ist ein Strahlscanner 6 angeordnet, der sowohl als Eintrittspupille EP für den in die erste Relay-Optikgruppe 41 eintretenden Laserstrahl 3 als auch mindestens zur Ablenkung V1 des Laserstrahls 3 relativ zur optischen Achse OA vorgesehen ist. Die erste Relay-Optikgruppe 41 ist dabei dazu ausgestaltet, den Laserstrahl 3 in einen Zwischenfokus 31 zu fokussieren, der sich ausreichend separat von der ersten und zweiten Relay-Optikgruppen 41, 42 zwischen der ersten und zweiten Relay-Optikgruppe 41, 42 befindet. Die zweite Relay-Optikgruppe 42 ist dazu ausgestaltet, den Zwischenfokus 31 zum Austritt aus der Relayoptik 4 abzubilden. Dabei sind die ersten und zweiten Brennweiten F1, F2 der Relayoptik 4 so gewählt, dass eine Entfernung L zwischen Eintrittspupille EP und Austrittspupille AP größer als der zweifache Durchmesser D des größten optischen Elements 411, 421 der Relayoptik 4 ist. In anderen Ausführungsformen kann diese Entfernung L auch mehr als der vierfach, achtfache oder zehnfache Durchmesser D betragen. Der Durchmesser D beträgt beispielsweise zwischen 30mm und 50mm. Die Fokussiereinheit 5 ist dazu ausgestaltet, den Laserstrahl oder das Laserstrahlbündel 3 in einen Fokus bzw. in ein Fokusarray der Vorrichtung 32 auf eine Fokusebene 33 zur Bearbeitung des Werkstücks 2 zu fokussieren. Die Vorrichtung 1 kann dabei polymerfrei aufgebaut sein und ermöglicht die Bearbeitung schwer zugänglicher Werkstücke 2 mittels eines Lasers und ermöglicht für Laserprozesse mit hohen Leistungen > 1 kW eine stabile Prozessführung mit gleichermaßen geringem lateralen Platzbedarf oberhalb der Bearbeitungszone auf dem Werkstück 2. Die Vorrichtung 1 kann zum Laserschweißen, Laserauftragsschweißen, Laserlöten, Laserschneiden Laserabtragen, Laserbohren, Laserstrahlmodifizieren oder zur Laseroberflächenstrukturierung verwendet werden.

In der weiteren in Fig.1b gezeigten Ausführungsform ist zwischen der ersten Relay-Optikgruppe 41 und der zweiten Relay-Optikgruppe 42 ein weiterer Strahlscanner 6' im Strahlengang 3 angeordnet, um damit entweder den abzubildenden Strahlengang 3 nochmals zu modifizieren oder aber einen weiteren Strahl 3' zusätzlich zum bereits die erste Relay-Optikgruppe 41 durchlaufenden Strahlengang 3 einzukoppeln oder aber um eine Bildüberwachung und Prozessbeobachtung in die Vorrichtung 1 zu integrieren.

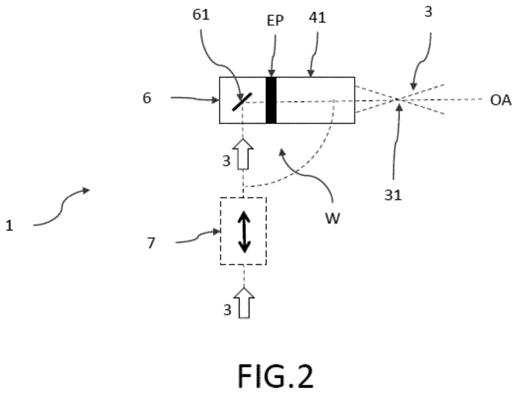

Fig.2 zeigt eine schematische Ausschnittdarstellung einer Ausführungsform der erfindungsgemäßen Vorrichtung 1 gemäß Fig.1a hier mit zusätzlichem Verschiebeelement 7 (in zwei möglichen Anordnungen dargestellt als durchgezogen und gestrichelt), das in Ausbreitungsrichtung A des Laserstrahls 3 gesehen vor dem Strahlscanner 6 im Laserstrahl 3 angeordnet ist. Dieses Verschiebeelement ermöglicht eine stufenlose Variation der Fokusebene 33. Das Verschiebeelement 7 als zusätzliches optisches Element ist außerhalb der durch die Relayoptik 4 definierten optischen Achse OA angeordnet, sodass der durch das Verschiebeelement 7 hindurchgetretene Laserstrahl 3 in einem Winkel W zur optischen Achse OA auf den Strahlscanner 6 fällt und der Strahlscanner 6 dazu ausgebildet ist, den Laserstrahl 3 entlang der optischen Achse OA umzulenken (hier mit einem Spiegel 61). Bevorzugt ist der Winkel W 90 Grad, um die Höhe der Vorrichtung oberhalb des Werkstücks bei gleichbleibender Länge L der Vorrichtung zu verringern. Das Verschiebeelement 7 (auch als Z-Shifter bezeichnet) kann dabei als ein zwei- oder mehrlinsiges Teleskop oder anderweitiges System zur Strahlgrößenveränderung und Divergenzveränderung ausgeführt sein. Bei mindestens einer der Linsen des Verschiebeelements 7 (hier nicht im Detail gezeigt) kann die Position der Linsen entlang der Ausbreitungsrichtung A des Laserstrahls 3 und somit die Lage der Fokusebene 33 geändert werden. Das Teleskop 7 korrigiert zum Beispiel die Aberrationen des optischen Systems aus Relayoptik 4 und Fokussiereinheit 5. Bei der Auslegung des Verschiebeelements 7 kann berücksichtigt werden, dass eine Brennweitenänderung des Gesamtsystems zu einer Variation der Spotgröße im Fokus der Vorrichtung 32 führt, welche je nach Bearbeitungsmodus des Werkstücks 2 minimiert werden sollte. Auch hier könnte analog zu Fig.1b ein weiterer Strahlscanner 6' im Strahlengang 3 angeordnet sein.

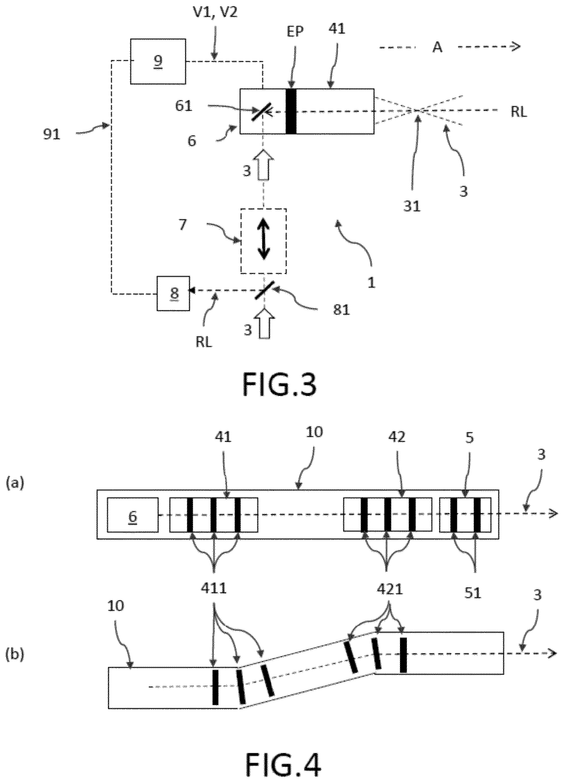

Fig.3 zeigt eine schematische Ausschnittdarstellung einer Ausführungsform der erfindungsgemäßen Vorrichtung 1 mit Sensor 8 und Steuereinheit 9. Hierbei umfasst der Strahlscanner 6 ein System an Spiegeln 61 zumindest zur Ablenkung V1 des Laserstrahls 3 relativ zur optischen Achse OA (zweidimensionaler Scanner). Aus Gründen der Übersichtlichkeit ist hier nur ein einziger Spiegel dargestellt. Zweidimensionale Strahlscanner 6 können aber auch mehrere Spiegel 61 umfassen. Der Strahlscanner 6 kann in Verbindung mit dem Verschiebeelement 7 (Z-Shifter) aber auch als dreidimensionaler Strahlscanner gemeinsam wirken, so dass zusätzlich auch eine Variation V2 des Laserstrahls 3 entlang der optischen Achse OA ermöglicht wird. In der hier gezeigten Ausführungsform ist zusätzlich ein Spiegel 81 in Ausbreitungsrichtung des Laserstrahls 3 gesehen vor dem Verschiebeelement 7 angeordnet, der semitransparent ausgeführt ist. Der Spiegel 81 sorgt dafür, dass der Prozessüberwachungsstrahl RL zu einem optischen Sensor 8 aus dem Strahlengang ausgekoppelt wird, so dass das vom Werkstück 2 rückreflektiertes Licht als Prozessüberwachungsstrahl RL vom Sensor 8 detektieren werden kann. Der Prozessüberwachungsstrahl fällt zumindest zum Teil vom Werkstück 2 in umgekehrter Strahlrichtung auf die erfindungsgemäße Vorrichtung und durchläuft diese koaxial entgegen der Ausbreitungsrichtung des Laserstrahls 3 zurück bis zu einer Stelle, wo der Prozessüberwachungsstrahl RL in geeigneter Weise (hier mittels Spiegel 81) aus der Vorrichtung ausgekoppelt und mindestens einem Sensor 8 zugeführt wird. Für eine automatische Steuerung des Bearbeitungsprozesses ist der Sensor 8 mit einer Steuerungseinheit 9 über Datenleitungen 91 geeignet verbunden, sodass die Steuerungseinheit 9 die Bearbeitung des Werkstücks 2 auf Basis des vom Sensor 8 detektierten Lichts RL über entsprechende Ansteuerung des Strahlscanners 6 zur Variation V1, V2 des Fokus der Vorrichtung 32 steuern kann. Auch hier könnte analog zu Fig.1b ein weiterer Strahlscanner 6' im Strahlengang 3 angeordnet sein.

Fig.4 zeigt eine schematische Darstellung einer Ausführungsform der erfindungsgemäßen Vorrichtung 1 angeordnet in einem (a) linearen Tubus 10 und (b) einem geknickten Tubus 10. Hierbei sind zumindest der Strahlscanner 6, die Relay-Optikgruppen 41, 42 und die Fokussiereinheit 5 in dem Tubus 10 angeordnet, wobei die optischen Elemente 411, 421, 51, 61 von Strahlscanner 6, Relay-Optikgruppen 41, 42 und Fokussiereinheit 5 geeignet angeordnet sind, den Laserstrahl 3 durch den jeweiligen Tubus 10 zu leiten.

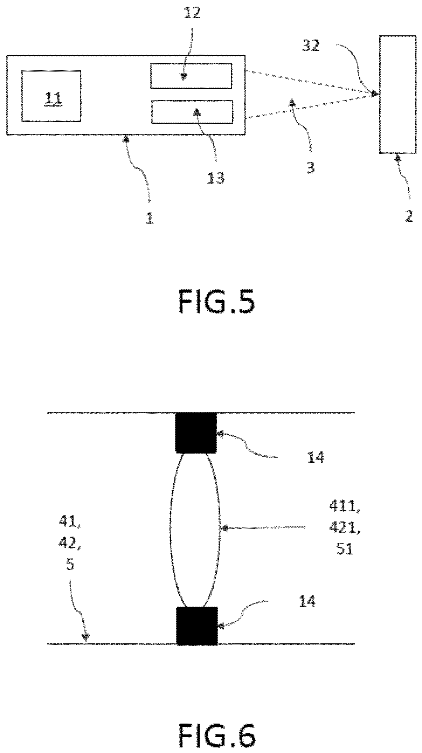

Fig.5 zeigt eine schematische Darstellung einer Ausführungsform der erfindungsgemäßen Vorrichtung 1 mit Laserlichtquelle 11 sowie Zuführeinrichtung 12 und Absaugvorrichtung 13. Die Laserlichtquelle 11 kann Laserlicht beispielsweise mit einer Wellenlänge zwischen 157nm und 10600nm zur Bearbeitung des Werkstücks 2 aussenden. Die Laserlichtquelle 11 kann dabei ein Laser aus der Gruppe Excimer-Laser, Nd:YAG-Laser, Festkörperlaser, Diodenlaser, Faserlaser oder CO₂-Laser sein. Zusätzlich kann die Vorrichtung 1 zumindest eine integrierte Zuführungsvorrichtung 12 für die Zufuhr von Zusatzwerkstoffen in Draht-, Pulver-, Band oder Gasform und/oder zumindest eine integrierte Absaugvorrichtung 13 zum Absaugen von Prozessemissionen umfassen. Manche Bearbeitungsprozesse erfordern die Zufuhr von Zusatzwerkstoffen in den heißen Bereich um den Fokus der Vorrichtung herum. Das gleiche gilt für eventuelle Absaugungen von Prozessemissionen, die ohne solche Absaugungen den Bearbeitungsprozess negativ beeinflussen oder zu einer Gefährdung der Umgebung führen könnten. Die Ablenkung V1 des Laserstrahls mittels Strahlscanners 6 kann dabei mit der Zufuhr von Zusatzwerkstoffen durch die Zuführungsvorrichtung 12 synchronisiert sein.

Fig.6 zeigt eine schematische Darstellung einer Aufhängung der optischen Elemente 411, 421, 51 in Federelementen 14 am Beispiel eines so aufgehängten optischen Elements in Form einer Linse. Das ermöglicht einen thermischen Ausgleich des Optiksystems bei hoher thermischer Belastung durch hohe Laserleistungen und sichert zusätzlich der erfindungsgemäßen Vorrichtung 1 eine längere Lebensdauer und eine bessere Zuverlässigkeit bei geringerem Wartungsaufwand.

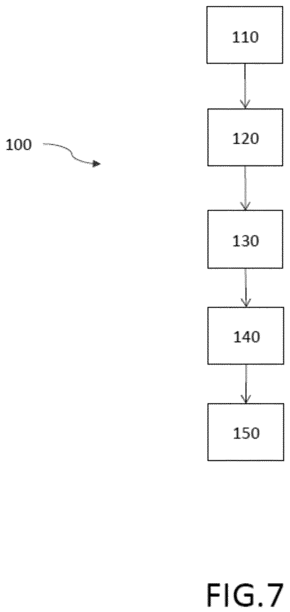

Fig.7 zeigt eine schematische Darstellung einer Ausführungsform des erfindungsgemäßen Verfahrens zur Bearbeitung schwer zugänglicher Werkstücke 2 mittels der erfindungsgemäßen Vorrichtung 1 (siehe auch Figuren 1 - 6) umfassend eine Relayoptik 4 mit einer durch die Relayoptik 4 hindurchlaufenden optischen Achse OA und mit mindestens einer ersten und einer zweiten Relay-Optikgruppe 41, 42 mit jeweils mehreren optischen Elementen 411, 421 zur Erzeugung einer jeweiligen ersten und zweiten Brennweite F1, F2 und eine in der optischen Achse OA in Ausbreitungsrichtung A des Laserstrahls 3 gesehen dahinter angeordnete Fokussiereinheit 5 mit mehreren optischen Elementen 51 zur Erzeugung einer dritten Brennweite F3, sowie einen in Ausbreitungsrichtung A des Laserstrahls 3 gesehen vor der ersten Relay-Optikgruppe 41 angeordneten Strahlscanner 6, umfassend
- Einleiten 110 des Laserstrahls 3 durch den Strahlscanner 6 als Eintrittspupille EP in die erste Relay-Optikgruppe 41,
- Fokussieren 120 des Laserstrahls 3 durch die erste Relay-Optikgruppe 41 in einen Zwischenfokus 31, der sich separat von der ersten und zweiten Relay-Optikgruppen 41, 42 zwischen der ersten und zweiten Relay-Optikgruppe 41, 42 befindet,
- Abbilden 130 des Zwischenfokus 31 durch die zweite Relay-Optikgruppe 42 zum Austritt aus der Relayoptik 4,
- Fokussieren 140 des Laserstrahls oder Laserstrahlbündels 3 durch die Fokussiereinheit 5 in einem Fokus der Vorrichtung 32 auf einer Fokusebene 33 zur Bearbeitung des Werkstücks 2, und
- Bearbeitung 150 des Werkstücks 2 mittels zumindest einer Ablenkung V1 des Laserstrahls 3 relativ zur optischen Achse OA zur Bewegung des Fokus oder des Fokusarrays oder des beliebig geformten Zwischenbilds der Vorrichtung 32 in der Fokusebene 33 mittels des Strahlscanners 6, wobei eine Entfernung L zwischen Eintrittspupille EP und einem Ende der Vorrichtung in Richtung des Laserstrahls AP größer als ein zweifacher, vorzugsweise ein vierfacher, noch bevorzugter ein achtfacher, Durchmesser D des größten optischen Elements 411, 421 der Relayoptik 4 ist.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der Erfindung gemäß der vorliegenden Ansprüche umfasst.

### LISTE DER BEZUGSZEICHEN

- 1: erfindungsgemäße Vorrichtung
- 2: zu bearbeitendes Werkstück
- 3: abbildenden Strahlengang, beispielsweise ein Laserstrahl
- 3': weiterer Strahl
- 31: Zwischenfokus
- 32: Fokus der Vorrichtung
- 33: Fokusebene
- 4: Relayoptik
- 41: erste Relay-Optikgruppe
- 411: optische Elemente der ersten Relay-Optikgruppe
- 42: zweite Relay-Optikgruppe
- 421: optische Elemente der zweiten Relay-Optikgruppe
- 5: Fokussiereinheit
- 51: optische Elemente der Fokussiereinheit
- 6, 6': Strahlscanner
- 61: Spiegel
- 7: Verschiebeelement (Z-Shifter)
- 8: optischer Sensor
- 81: zusätzlicher semitransparenter Spiegel
- 9: Steuereinheit
- 91: Datenleitung
- 10: Tubus
- 11: Laserlichtquelle
- 12: Zuführeinrichtung für Zusatzstoffe zum Bearbeitungsprozess
- 13: Absaugvorrichtung für Prozessemissionen
- 14: Federelemente zur Aufhängung der optischen Elemente

- 100: erfindungsgemäßes Verfahren
- 110: Einleiten des abbildenden Strahlengangs in die Relayoptik mittels Strahlscanner
- 120: Fokussieren des abbildenden Strahlengangs in einem Zwischenfokus
- 130: Abbilden des Zwischenfokus auf die Austrittspupille
- 140: Fokussieren des abbildenden Strahlengangs in einem Fokus der Vorrichtung
- 150: Bearbeiten des Werkstücks

- A: Ausbreitungsrichtung des abbildenden Strahlengangs
- AP: Ende der Vorrichtung in Richtung des abbildenden Strahlengangs (zugewandt zur Fokus der Vorrichtung)
- D: Durchmesser des größten optischen Elements der Relayoptik
- EP: Eintrittspupille
- F1: erste Brennweite der ersten Relay-Optikgruppe
- F2: zweite Brennweite der zweiten Relay-Optikgruppe
- F3: dritte Brennweite der Fokussiereinheit
- L: Entfernung zwischen Eintritts- und Austrittspupille
- OA: optische Achse
- RL: vom Werkstück rückreflektierter Prozessüberwachungsstrahl
- V1: Ablenkung des abbildenden Strahlengangs relativ zur optischen Achse
- V2: Variation des abbildenden Strahlengangs entlang der optischen Achse
- W: Winkel zwischen abbildendem Strahlengang nach Austritt aus Verschiebeelement und optischer Achse

## Patentansprüche

1. Eine Vorrichtung (1) zur Bearbeitung schwer zugänglicher Werkstücke (2) mittels eines abbildenden Strahlengangs (3) umfassend eine Relayoptik (4) mit einer durch die Relayoptik (4) hindurchlaufenden optischen Achse (OA) und mit mindestens einer ersten und einer zweiten Relay-Optikgruppe (41, 42) mit jeweils mehreren optischen Elementen (411, 421) zur Erzeugung einer jeweiligen ersten und zweiten Brennweite (F1, F2) und eine in der optischen Achse (OA) in Ausbreitungsrichtung (A) des abbildenden Strahlengangs (3) gesehen dahinter angeordnete Fokussiereinheit (5) mit mehreren optischen Elementen (51) zur Erzeugung einer dritten Brennweite (F3), sowie einen in Ausbreitungsrichtung (A) des abbildenden Strahlengangs (3) gesehen vor der ersten Relay-Optikgruppe (41) angeordneten Strahlscanner (6), der sowohl als Eintrittspupille (EP) für den in die erste Relay-Optikgruppe (41) eintretenden abbildenden Strahlengang (3) als auch mindestens zur Ablenkung (V1) des abbildenden Strahlengangs (3) relativ zur optischen Achse (OA) vorgesehen ist, wobei die erste Relay-Optikgruppe (41) dazu ausgestaltet ist, den abbildenden Strahlengang (3) in einen Zwischenfokus (31) zu fokussieren, der sich separat von der ersten und zweiten Relay-Optikgruppen (41, 42) zwischen der ersten und zweiten Relay-Optikgruppe (41, 42) befindet, und die zweite Relay-Optikgruppe (42) dazu ausgestaltet ist, den Zwischenfokus (31) zum Austritt aus der Relayoptik (4) abzubilden und die Fokussiereinheit (5) dazu ausgestaltet ist, den abbildenden Strahlengang (3) in einem Fokus der Vorrichtung (32) auf eine Fokusebene (33) zur Bearbeitung des Werkstücks (2) zu fokussieren, wobei in Ausbreitungsrichtung (A) des abbildenden Strahlengangs (3) gesehen vor dem Strahlscanner (6) ein optisches Verschiebeelement (7) im abbildenden Strahlengang (3) angeordnet ist, das eine stufenlose Variation der Fokusebene (33) ermöglicht
eine Entfernung (L) zwischen Eintrittspupille (EP) und einem Ende der Vorrichtung in Richtung des abbildenden Strahlengangs (AP) größer als ein zweifacher, vorzugsweise ein vierfacher, noch bevorzugter ein achtfacher, Durchmesser (D) des größten optischen Elements (411, 421) der Relayoptik (4) ist, wobei
**dadurch gekennzeichnet,**
**dass** der Strahlscanner (6) ein System an Spiegeln (61) zumindest zur Ablenkung (V1) des abbildenden Strahlengangs (3) relativ zur optischen Achse (OA) umfasst, wobei die Vorrichtung mindestens einen optischen Sensor (8) aufweist, sodass ein Prozessüberwachungsstrahl (RL) in Verwendung koaxial zur optischen Achse (OA) durch die Vorrichtung (1) zur Detektion durch den mindestens einen optischen Sensor (8) verläuft.

2. Die Vorrichtung (1) nach Anspruch 1,
**dadurch gekennzeichnet,**
**dass** das Verschiebeelement (7) außerhalb der durch die Relayoptik (4) definierten optischen Achse (OA) angeordnet ist, sodass der durch das Verschiebeelement (7) hindurchgetretene abbildenden Strahlengang (3) in einem Winkel (W) zur optischen Achse (OA) auf den Strahlscanner (6) fällt und der Strahlscanner (6) dazu ausgebildet ist, den abbildenden Strahlengang (3) entlang der optischen Achse (OA) umzulenken, vorzugsweise ist der Winkel (W) 90 Grad.

3. Die Vorrichtung (1) nach einem der vorstehenden Ansprüche,
**dadurch gekennzeichnet,**
**dass** der Strahlscanner (6) in Verbindung mit dem Verschiebeelement (7) ein dreidimensionaler Strahlscanner ist, dessen System an Spiegeln (61) auch eine Variation (V2) des abbildenden Strahlengangs (3) entlang der optischen Achse (OA) ermöglichen.

4. Die Vorrichtung (1) nach einem der vorstehenden Ansprüche,
**dadurch gekennzeichnet,**
**dass** der Sensor (8) mit einer Steuerungseinheit (9) verbunden ist, die dazu ausgebildet ist, die Bearbeitung des Werkstücks (2) auf Basis einer vom Sensor (8) detektierten Strahlung des Prozessüberwachungsstrahls (RL) zu steuern.

5. Die Vorrichtung (1) nach einem der voranstehenden Ansprüche,
**dadurch gekennzeichnet,**
**dass** zumindest der Strahlscanner (6), die Relayoptik (4) und die Fokussiereinheit (4) in einem Tubus (10) angeordnet sind, wobei der Tubus (10) als linearer, ein- oder mehrfach geknickter oder beweglicher Tubus ausgebildet sein kann, wobei die optischen Elemente (411, 421, 51, 61) von Strahlscanner (6), Relayoptik (4) und Fokussiereinheit (5) geeignet angeordnet sind, den abbildenden Strahlengang (3) durch den jeweiligen Tubus (10) zu leiten.

6. Die Vorrichtung (1) nach einem der voranstehenden Ansprüche,
**dadurch gekennzeichnet,**
**dass** die Vorrichtung (1) eine Lichtquelle (11) zur Erzeugung des abbildenden Strahlengangs (3) mit einer Wellenlänge, vorzugsweise zwischen 157nm und 10600nm, umfasst, vorzugsweise ist die Lichtquelle (11) ein Laser aus der Gruppe Nd:YAG-Laser, Festkörperlaser, Diodenlaser, Faserlaser oder CO₂-Laser oder der abbildende Strahlengang (3) ist ein Einzelstrahl, ein Strahlenbündel oder eine beliebige Strahlform aus einer Bildquelle.

7. Die Vorrichtung (1) nach einem der voranstehenden Ansprüche,
**dadurch gekennzeichnet,**
**dass** die zweite Relay-Optikgruppe (42) und die Fokussiereinheit (5) eine ineinander integrierte gemeinsame Optikgruppe bilden.

8. Die Vorrichtung (1) nach einem der voranstehenden Ansprüche,
**dadurch gekennzeichnet,**
**dass** die Vorrichtung (1) zumindest eine integrierte Zuführungsvorrichtung (12) für eine Zufuhr von Zusatzwerkstoffen in Draht-, Pulver-, Band oder Gasform und/oder zumindest eine integrierte Absaugvorrichtung (13) zum Absaugen von Prozessemissionen umfasst.

9. Die Vorrichtung (1) nach Anspruch 8,
**dadurch gekennzeichnet,**
**dass** zumindest die Ablenkung (V1) des abbildenden Strahlengangs mittels Strahlscanners (6) mit der Zufuhr von Zusatzwerkstoffen durch die Zuführungsvorrichtung (12) synchronisiert ist.

10. Die Vorrichtung (1) nach einem der voranstehenden Ansprüche,
**dadurch gekennzeichnet,**
**dass** die Vorrichtung (1) polymerfrei aufgebaut ist.

11. Die Vorrichtung (1) nach einem der voranstehenden Ansprüche,
**dadurch gekennzeichnet,**
**dass** zumindest einige der optischen Elemente (411, 421, 51) in Federelementen (14) aufgehängt sind.

12. Die Vorrichtung (1) nach einem der voranstehenden Ansprüche,
**dadurch gekennzeichnet,**
**dass** zwischen der ersten Relay-Optikgruppe (41) und der zweiten Relay-Optikgruppe (42) ein weiterer Strahlscanner (6') im Strahlengang (3) angeordnet ist.

13. Verwendung einer Vorrichtung (1) nach Anspruch 1 zum Laserschweißen, Laserauftragsschweißen, Laserlöten, Laserschneiden, Laserabtragen, Laserbohren, Lasermodifikation oder zur Laseroberflächenstrukturierung.

14. Ein Verfahren (100) zur Bearbeitung schwer zugänglicher Werkstücke (2) mittels einer Vorrichtung (1) nach Anspruch 1, umfassend
- Einleiten (110) des abbildenden Strahlengangs (3) durch den Strahlscanner (6) als Eintrittspupille (EP) in die erste Relay-Optikgruppe (41),
- Fokussieren (120) des abbildenden Strahlengangs (3) durch die erste Relay-Optikgruppe (41) in einen Zwischenfokus (31), der sich separat von der ersten und zweiten Relay-Optikgruppe (41, 42) zwischen der ersten und zweiten Relay-Optikgruppe (41, 42) befindet,
- Abbilden (130) des Zwischenfokus (31) durch die zweite Relay-Optikgruppe (42) zum Austritt aus der Relayoptik (4),
- Fokussieren (140) des abbildenden Strahlengangs (3) durch die Fokussiereinheit (5) in einem Fokus der Vorrichtung (32) auf einer Fokusebene (33) zur Bearbeitung des Werkstücks (2), und
- Bearbeitung (150) des Werkstücks (2) mittels zumindest der Ablenkung (V1) des abbildenden Strahlengangs (3) relativ zur optischen Achse (OA) zur Bewegung des Fokus der Vorrichtung (32) in der Fokusebene (33) mittels des Strahlscanners (6), wobei eine Entfernung (L) zwischen Eintrittspupille (EP) und einem Ende der Vorrichtung in Richtung des abbildenden Strahlengangs (AP) größer als ein zweifacher, vorzugsweise ein vierfacher, noch bevorzugter ein achtfacher, Durchmesser (D) des größten optischen Elements (411, 421) der Relayoptik (4) ist.

## Claims

1. A device (1) for processing hard-to-access workpieces (2) by means of an imaging optical path (3), comprising a relay optical system (4) with an optical axis (OA) passing through the relay optical system (4) and with at least one first and one second relay optical group (41, 42), each having a plurality of optical elements (411, 421) for generating a respective first and second focal length (F1, F2), and a focusing unit (5) arranged behind it in the optical axis (OA), viewed in the propagation direction (A) of the imaging optical path (3), with a plurality of optical elements (51) for generating a third focal length (F3) as well as a beam scanner (6) arranged before the first relay optical group (41), viewed in the propagation direction (A) of the imaging optical path (3), which beam scanner is provided both as an entrance pupil (EP) for the imaging optical path (3) entering the first relay optical group (41) and for at least deflecting (V1) the imaging optical path (3) in relation to the optical axis (OA), the first relay optical group (41) being adapted to focus the imaging optical path (3) in an intermediate focus (31) located separately from the first and the second relay optical group (41, 42) between the first and the second relay optical group (41, 42), and the second relay optical group (42) being adapted for imaging the intermediate focus (31) for exit from the relay optical system (4) and the focusing unit (5) being adapted for focusing the imaging optical path (3) in a focus of the device (32) on a focus plane (33) for processing of the workpiece (2), wherein
a distance (L) between the entrance pupil (EP) and an end of the device in the direction of the imaging optical path (AP) is larger than twice, preferably four times, even more preferably eight times the diameter (D) of the largest optical element (411, 421) of the relay optical system (4), wherein
an optical shifting element (7) being arranged before the beam scanner (6), viewed in the propagation direction (A) of the imaging optical path (3) in the imaging optical path (3), which shifting element allows continuous variation of the focus plane (33),
**characterized in that**
the beam scanner (6) comprises a system of mirrors (61) at least for deflecting (V1) the imaging optical path (3) in relation to the optical axis (OA), the device having at least one optical sensor (8) so that a process monitoring beam (RL) passes, in use, coaxially with the optical axis (OA) through the device (1) for detection by the at least one optical sensor (8).

2. The device (1) according to claim 1,
**characterized in that**
the shifting element (7) is arranged outside the optical axis (OA) defined by the relay optical system (4) so that the imaging optical path (3) which has passed through the shifting element (7) impinges upon the beam scanner (6) at an angle (W) to the optical axis (OA) and the beam scanner (6) is adapted for deflecting the imaging optical path (3) along the optical axis (OA); preferably, the angle (W) is 90°.

3. The device (1) according to one of the above claims,
**characterized in that**
in combination with the shifting element (7), the beam scanner (6) is a three-dimensional beam scanner whose system of mirrors (61) also allows variation (V2) of the imaging optical path (3) along the optical axis (OA).

4. The device (1) according to one of the above claims,
**characterized in that**
the sensor (8) is connected to a control unit adapted for controlling the processing of the workpiece (2) on the basis of a radiation of the process monitoring beam (RL), detected by the sensor (8).

5. The device (1) according to one of the above claims,
**characterized in that**
at least the beam scanner (6), the relay optical system (4) and the focusing unit (4) are arranged in a tube (10), wherein the tube (10) can be formed as a linear tube, a tube with one or more kinks or a movable tube, the optical elements (411, 421, 51, 61) of the beam scanner (5), the relay optical system (4) and the focusing unit (5) being arranged suitably for guiding the imaging optical path (3) through the respective tube (10).

6. The device (1) according to one of the above claims,
**characterized in that**
the device (1) comprises a light source (11) for generating the imaging optical path (3) with a wavelength preferably between 157 nm and 10600 nm; preferably, the light source (11) is a laser from the group Nd:YAG laser, solid-state laser, diode laser, fibre laser or CO₂ laser, or the imaging optical path (3) is a single beam, a beam bundle or any form of beam from an image source.

7. The device (1) according to one of the above claims,
**characterized in that**
the second relay optical group (42) and the focusing unit (5) form a mutually integrated common optical group.

8. The device (1) according to one of the above claims,
**characterized in that**
the device (1) comprises at least one integrated feeding device (12) for feeding in additional materials in the form of wire, powder, belt or gas, and/or at least one integrated aspiration device (13) for aspirating process emissions.

9. The device (1) according to claim 8,
**characterized in that**
at least the deflection (V1) of the imaging optical path is synchronized with the feeding of additional materials through the feeding device (12) by means of the beam scanner (6).

10. The device (1) according to one of the above claims,
**characterized in that**
the device (1) is free from polymers.

11. The device (1) according to one of the above claims,
**characterized in that**
at least some of the optical elements (411, 421, 51) are suspended in spring elements (14).

12. The device (1) according to one of the above claims,
**characterized in that**
between the first relay optical group (41) and the second relay optical group (42), an additional beam scanner (6') is arranged in the optical path (3).

13. Use of a device (1) according to claim 1 for laser welding, laser build-up welding, laser soldering, laser cutting, laser abrasion, laser drilling, laser modification or for laser surface structuring.

14. A method (100) for processing hard-to-access workpieces (2) using a device (1) according to claim 1,
comprising
- directing (110) the imaging optical path (3) through the beam scanner (6) as an entrance pupil (EP) into the first relay optical group (41),
- focusing (120) the imaging optical path (3) through the first relay optical group (41) into an intermediate focus (31) positioned separately from the first and the second relay optical group (41, 42) between the first and the second relay optical group (41, 42),
- imaging (130) the intermediate focus (31) through the second relay optical group (42) for exit from the relay optical group (4),
- focusing (140) the imaging optical path (3) through the focusing unit (5) in a focus of the device (32) on a focus plane (33) for processing of the workpiece (2), and
- processing (150) the workpiece (2) by means of at least the deflection (V1) of the imaging optical path (3) in relation to the optical axis (OA) for moving the focus of the device (32) on the focus plane (33) by means of the beam scanner (6), wherein a distance (L) between the entrance pupil (EP) and an end of the device in the direction of the imaging optical path (AP) being larger than twice, preferably four times, even more preferably eight times, the diameter (D) of the largest optical element (411, 421) of the relay optical system (4).

## Revendications

1. Dispositif (1) destiné à l'usinage de pièces (2) difficiles d'accès au moyen d'un trajet optique de reproduction (3), comprenant une optique de relais (4) avec un axe optique (OA) traversant l'optique de relais (4) et comportant au moins un premier et un deuxième groupes optiques de relais (41, 42) comportant chacun plusieurs éléments optiques (411, 421) pour générer respectivement une première et une deuxième distance focale (F1, F2), ainsi qu'une unité de focalisation (5) disposée dans l'axe optique (OA), en arrière, vu dans le sens de propagation (A) du trajet optique de reproduction (3), comportant plusieurs éléments optiques (51) destinés à générer une troisième distance focale (F3), ainsi qu'un scanner de faisceaux (6) disposé en amont du premier groupe optique relais (41), vu dans le sens de propagation (A) du trajet optique de reproduction (3), qui est prévu à la fois comme pupille d'entrée (EP) pour le trajet optique de reproduction (3) entrant dans le premier groupe optique relais (41) qu'au moins pour la déviation (V1) du trajet optique de reproduction (3) par rapport à l'axe optique (OA), où le premier groupe optique relais (41) étant conçu pour focaliser le trajet optique de reproduction (3) en un foyer intermédiaire (31) situé séparément des premier et deuxième groupes optiques relais (41, 42) entre le premier et le deuxième groupe optique relais (41, 42), et le deuxième groupe optique relais (42) étant conçu pour reproduire le foyer intermédiaire (31) à la sortie de l'optique relais (4), et l'unité de focalisation (5) étant conçue pour focaliser le trajet optique de reproduction (3) en un foyer du dispositif (32) sur un plan focal (33) en vue de l'usinage de la pièce (2), où
la distance (L) entre la pupille d'entrée (EP) et une extrémité du dispositif dans la direction du trajet optique de reproduction (AP) étant supérieure à deux fois, de préférence quatre fois, voire de manière encore plus préférée huit fois, le diamètre (D) du plus grand élément optique (411, 421) de l'optique relais (4), où
vu dans la direction de propagation (A) du trajet optique de reproduction (3), un élément de décalage optique (7) est disposé dans le trajet optique de reproduction (3) en amont du scanner de faisceaux (6), lequel élément permettant une variation en continu du plan focal (33),
**caractérisé en ce que**
le scanner de faisceaux (6) comprend un système de miroirs (61) destiné au moins à dévier (V1) le trajet optique de reproduction (3) par rapport à l'axe optique (OA), où le dispositif comportant au moins un capteur optique (8), de sorte qu'en utilisation, un faisceau de surveillance de processus (RL) traverse le capteur optique (8) de manière coaxiale à l'axe optique (OA) traversant le dispositif (1) en vue de détection par ledit au moins un capteur optique (8).

2. Le dispositif (1) selon la revendication 1,
**caractérisé en ce**
**que** l'élément de décalage (7) est disposé à l'extérieur de l'axe optique (OA) défini par l'optique relais (4), de sorte que le trajet optique de reproduction (3) qui a traversé l'élément de décalage (7) tombe sur le scanner de faisceaux (6) en formant un angle (W) par rapport à l'axe optique (OA), et le scanner de faisceaux (6) est conçu pour dévier le trajet optique de reproduction (3) le long de l'axe optique (OA) ; de préférence, l'angle (W) est de 90 degrés.

3. Le dispositif (1) selon l'une des revendications précédentes,
**caractérisé en ce**
**que** le scanner de faisceaux (6), en association avec l'élément de décalage (7), est un scanner de faisceaux tridimensionnel dont le système de miroirs (61) permet également une variation (V2) du trajet optique de reproduction (3) le long de l'axe optique (OA).

4. Le dispositif (1) selon l'une des revendications précédentes
**caractérisé en ce**
**que** le capteur (8) est relié à une unité de commande (9) qui est conçue pour commander l'usinage de la pièce (2) sur la base d'un rayonnement du faisceau de surveillance du processus (RL) détecté par le capteur (8).

5. Le dispositif (1) selon l'une des revendications précédentes,
**caractérisé en ce que**
au moins le scanner de faisceaux (6), l'optique de relais (4) et l'unité de focalisation (5) sont disposés dans un tube (10), ledit tube (10) pouvant être conçu comme un tube linéaire, un tube à un ou plusieurs coudes, ou un tube mobile, les éléments optiques (411, 421, 51, 61) du scanner de faisceaux (6), de l'optique de relais (4) et de l'unité de focalisation (5) étant disposés de manière à guider le trajet optique de reproduction (3) à travers le tube (10) correspondant.

6. Dispositif (1) selon l'une des revendications précédentes,
**caractérisé en ce**
**que** le dispositif (1) comprend une source lumineuse (11) destinée à générer le trajet optique de reproduction (3) avec une longueur d'onde, de préférence comprise entre 157 nm et 10 600 nm, ; de préférence, la source lumineuse (11) est un laser appartenant au groupe des lasers Nd:YAG, des lasers à état solide, des lasers à diode, des lasers à fibre ou des lasers CO₂, ou bien le trajet optique de reproduction (3) est un faisceau unique, un faisceau multiple ou toute forme de faisceau provenant d'une source d'image.

7. Dispositif (1) selon l'une des revendications précédentes,
**caractérisé en ce**
**que** le deuxième groupe optique de relais (42) et l'unité de focalisation (5) forment un groupe optique commun intégré l'un dans l'autre.

8. Le dispositif (1) selon l'une des revendications précédentes,
**caractérisé en ce**
**que** le dispositif (1) comprend au moins un dispositif d'alimentation intégré (12) pour l'alimentation en matériaux d'apport sous forme de fil, de poudre, de bande ou de gaz et/ou au moins un dispositif d'aspiration intégré (13) pour l'aspiration des émissions de processus.

9. Dispositif (1) selon la revendication 8,
**caractérisé en ce**
**qu'**au moins la déviation (V1) du trajet optique de reproduction est synchronisée, au moyen du scanner de faisceaux (6), avec l'alimentation en matériaux d'apport par le dispositif d'alimentation (12).

10. Le dispositif (1) selon l'une des revendications précédentes,
**caractérisé en ce**
**que** le dispositif (1) est construit sans polymère.

11. Le dispositif (1) selon l'une des revendications précédentes,
**caractérisé en ce**
**qu'**au moins certains des éléments optiques (411, 421, 51) sont suspendus dans des éléments élastiques (14).

12. Dispositif (1) selon l'une des revendications précédentes,
**caractérisé en ce**
**qu'**un autre scanner de faisceaux (6') est disposé dans le trajet optique (3) entre le premier groupe optique relais (41) et le deuxième groupe optique relais (42).

13. Utilisation d'un dispositif (1) selon la revendication 1 pour le soudage au laser, le soudage par dépôt au laser, le brasage au laser, la découpe au laser, l'ablation au laser, le perçage au laser, la modification au laser ou la structuration de surface au laser.

14. Procédé (100) d'usinage de pièces (2) difficiles d'accès à l'aide d'un dispositif (1) selon la revendication 1,
comprenant
- l'introduction (110) du trajet optique de reproduction (3) par le scanner de faisceaux (6) en tant que pupille d'entrée (EP) dans le premier groupe optique relais (41),
- la focalisation (120) du trajet optique de reproduction (3) par le premier groupe optique relais (41) en un foyer intermédiaire (31), qui se trouve séparément des premier et deuxième groupes optiques relais (41, 42), entre le premier et le deuxième groupe optique relais (41, 42),
- formation d'une image (130) du foyer intermédiaire (31) par le deuxième groupe optique relais (42) en vue de la sortie de l'optique relais (4),
- focalisation (140) du trajet optique de reproduction (3) par l'unité de focalisation (5) en un foyer du dispositif (32) sur un plan focal (33) en vue de l'usinage de la pièce (2), et
- usinage (150) de la pièce (2) au moyen d'au moins la déviation (V1) du trajet optique de reproduction (3) par rapport à l'axe optique (OA) afin de déplacer le foyer du dispositif (32) dans le plan focal (33) à l'aide du scanner de faisceaux (6), la distance (L) entre la pupille d'entrée (EP) et une extrémité du dispositif dans la direction du trajet optique de reproduction (AP) étant supérieure à deux fois, de préférence quatre fois, voire de manière encore plus préférée huit fois, le diamètre (D) du plus grand élément optique (411, 421) de l'optique relais (4).
